# EUROPÄISCHE PATENTSCHRIFT

(11) **EP 1 801 610 B1**
(45) Veröffentlichungstag und Bekanntmachung des Hinweises auf die Patenterteilung: **18.06.2008**
(21) Anmeldenummer: 06024217.9
(22) Anmeldetag: 22.11.2006
(51) Int. Cl.: G01S 3/02, G01S 3/14, G01S 5/06, G01S 5/14

(54) **System zur Ermittlung des Standortes von Teilnehmern eines satellitengestützten Mobilfunksystems**
System for determining the location of participants of a satellite-based mobile communication system
Système destiné à déterminer la localisation d'abonnés à un système de téléphone mobile par satellite

(30) Priorität: 22.12.2005 DE 102005061596
(43) Veröffentlichungstag der Anmeldung: 27.06.2007
(73) Patentinhaber: Rohde & Schwarz GmbH & Co. KG, 81671 München (DE)
(72) Erfinder: Megow, Holger, 12557 Berlin (DE)
(74) Vertreter: Körfer, Thomas

(56) Entgegenhaltungen:
- US-B1- 6 680 694
- CROW R P: "Integrated Global Surveillance and Navigation System" POSITION LOCATION AND NAVIGATION SYMPOSIUM, 1994., IEEE LAS VEGAS, NV, USA 11-15 APRIL 1994, NEW YORK, NY, USA,IEEE, 11. April 1994 (1994-04-11), Seiten 186-193, XP010117732 ISBN: 0-7803-1435-2
- JENG S-S ET AL: "Smart antenna system and its application in low-earth-orbit satellite communication systems" IEE PROCEEDINGS: MICROWAVES, ANTENNAS AND PROPAGATION, IEE, STEVENAGE, HERTS, GB, Bd. 146, Nr. 2, 2. April 1999 (1999-04-02), Seiten 125-130, XP006013546 ISSN: 1350-2417

## Beschreibung

Die Erfindung betrifft ein System laut Oberbegriff des Hauptanspruches.

Es ist bekannt, über ein geeignetes ortsfestes Erfassungssystem die Teilnehmer eines satellitengestützten Mobilfunksystems zu identifizieren und gegebenenfalls auch den Inhalt der Kommunikation solcher Teilnehmer zu erfassen. Es wurde auch schon versucht, über bestimmte Parameter der Downlink-Verbindung eines so identifizierten Teilnehmers (Funkverbindung zwischen Satellit und Teilnehmer) den Standort des Teilnehmers zu ermitteln, dies ist mit diesem bekannten Verfahren jedoch nur mit unzureichender Genauigkeit möglich.

Es ist daher Aufgabe der Erfindung, ein System aufzuzeigen, mit dem der Standort von Teilnehmer eines satellitengestützten Mobilfunksystems möglichst genau ermittelt werden kann.

Diese Aufgabe wird gelöst durch ein System laut Hauptanspruch. Vorteilhafte Weiterbildungen ergeben sich aus den Unteransprüchen.

Mit dem im Ermittlungsgebiet arbeitenden luftbewegten Funk-Empfangs- und Peilsystem kann der Standort von am Boden aktiven Mobilfunk-Teilnehmern relativ genau ermittelt werden. Als Fluggerät eignet sich jedes übliche bemannte oder unbemannte Flugzeug, gegebenenfalls ein Hubschrauber oder auch nur ein Ballon. Als besonders vorteilhaft hat es sich erwiesen, die Daten des mit dem fliegenden Funk-Empfangs- und Peilsystem ermittelten Daten mit den in bekannter Weise in einem stationären Erfassungssystem ermittelten Daten zu korrelieren und so einem ermittelten Standort eines Teilnehmers auch dessen Identität zuzuordnen. Ein solches System ist beispielsweise für Aufklärungs- oder Rettungsmaßnahmen bestens geeignet.

Die Erfindung wird im folgenden anhand der schematischen Zeichnungen an Ausführungsbeispielen näher erläutert. In der Zeichnung zeigen:
- Fig. 1: das erfindungsgemäße Prinzip zur Standortbestimmung eines Teilnehmers eines satellitengestützten Mobilfunksystems mittels einer in einem Flugzeug untergebrachten Funk-Empfangs- und Peil-Einrichtung;
- Fig. 2 und 3: zwei mögliche Ausführungen für diese Empfangs- und Peileinrichtung und
- Fig. 4: das Prinzip der Korrelation zwischen den durch das stationäre System und das fliegende System ermittelten Daten.

Gemäß der Erfindung ist in einem Fluggerät, beispielsweise einem bemannten oder unbemannten Flugzeug, eine Funk-Empfangs- und Peileinrichtung angeordnet, die im Uplink-Frequenzbereich (Funkverbindung zwischen Teilnehmer und Satellit) des Mobilfunksystems arbeitet. Bei den meisten üblichen Satellitengestützten Mobilfunksystemen dergleichen wird für die Uplink- und Downlink-Verbindung jeweils ein gesonderter Frequenzbereich benutzt, im Inmarsat-System wird beispielsweise für die Uplink-Verbindung der Frequenzbereich zwischen 1625,5 und 1660,5 MHz benutzt.

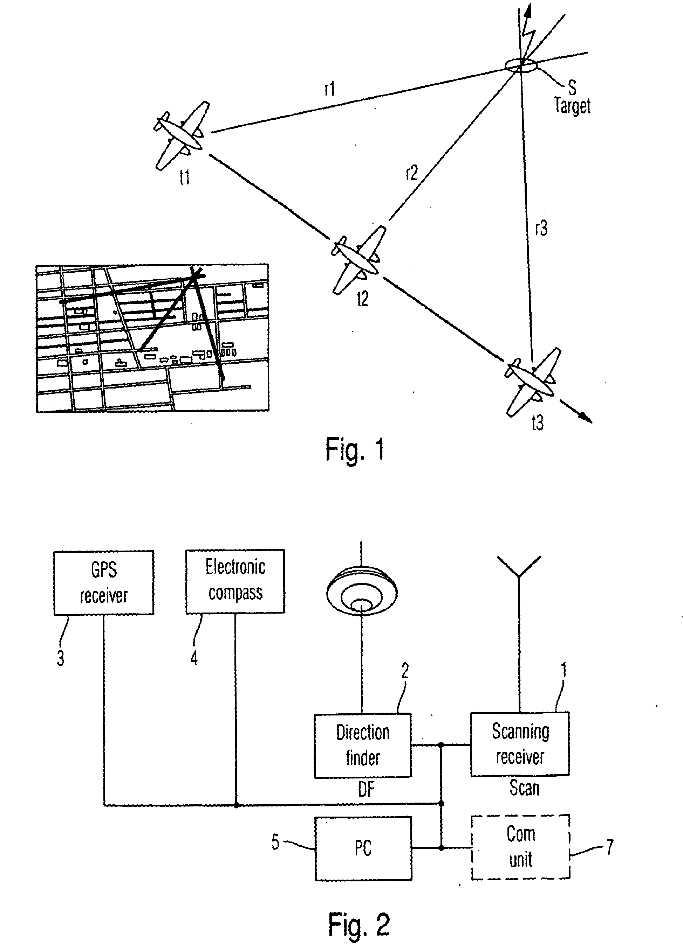

Fig. 2 zeigt ein erstes Ausführungsbeispiel einer geeigneten Funk-Empfangs- und Peileinrichtung, die vor allem dann geeignet ist, wenn nicht allzu viele Teilnehmer gleichzeitig aktiv sind. Die Einrichtung umfasst einen üblichen im zu erfassenden Frequenzbereich arbeitenden Suchempfänger 1 und einen ebenfalls in diesem Frequenzbereich arbeitenden Schmalband-Funkpeiler 2. Außerdem ist ein die jeweilige Position des die Einrichtung aufnehmenden Fluggerätes bestimmender GPS-Empfänger 3 mit einem zugehörigen elektronischen Kompass 4 vorgesehen. Die von diesen Geräten ermittelten Daten werden in einem Rechner 5 zusammengefasst und gespeichert.

Der Suchempfänger 1 überwacht permanent den relevanten Uplink-Frequenzbereich des Mobilfunksystems. Sobald über den Suchempfänger die Aktivität eines Teilnehmers auf einem der Funkkanäle in diesem Frequenzbereich festgestellt wird, wird der Funkpeiler 2 automatisch auf diese Frequenz kommandiert und der Funkpeiler 2 ermittelt die Richtung (Azimut) des aktiven Teilnehmers gegenüber der momentanen Flugposition des Fluggerätes, die dann im Rechner 5 gespeichert wird.

Fig. 1 zeigt, wie auf diese Weise der Standort eines im Mobilfunksystem aktiven Teilnehmers s ermittelt wird. Über die Peileinrichtung im Flugzeug, das an dem Teilnehmer s vorbeifliegt, werden nacheinander für verschiedene Positionen t1, t2, t3 jeweils der Azimut r1, r2, r3 des Teilnehmers s gegenüber der Momentanposition des Flugzeugs ermittelt und daraus dann im Rechner 5 nach einem bekannten Triangulationsverfahren der Standort des Teilnehmers s geortet. Die so ermittelten Koordinaten werden im Speicher des Rechners 5 abgespeichert. Wenn die Aktivität eines Teilnehmers s ausreichend lang ist, können auf diese Weise nacheinander ausreichend viele Peilungen von verschiedenen Positionen des Flugzeugs aus durchgeführt werden.

Wenn im Suchempfänger 1 erstmals die Belegung eines neuen Funkkanals festgestellt wird, wird die entsprechende Startzeit registriert und ebenfalls im Rechner 5 gespeichert. Im Speicher des Rechners sind schließlich neben der Frequenz des aktiven Funkkanals auch die Startzeit des Verbindungsbeginns und die über den GPS-Empfänger 3 und Kompass 4 bestimmte eigene Position des Fluggeräts gespeichert. Diese Daten werden für alle während eines Fluges im Ermittlungsgebiet aktiven Teilnehmer ermittelt und gespeichert. Wird hierbei festgestellt, dass ein bisher aktiver Funkkanal nicht mehr belegt ist, so wird über die vorher registrierte Startzeit die Dauer der Kommunikation berechnet und ebenfalls gespeichert.

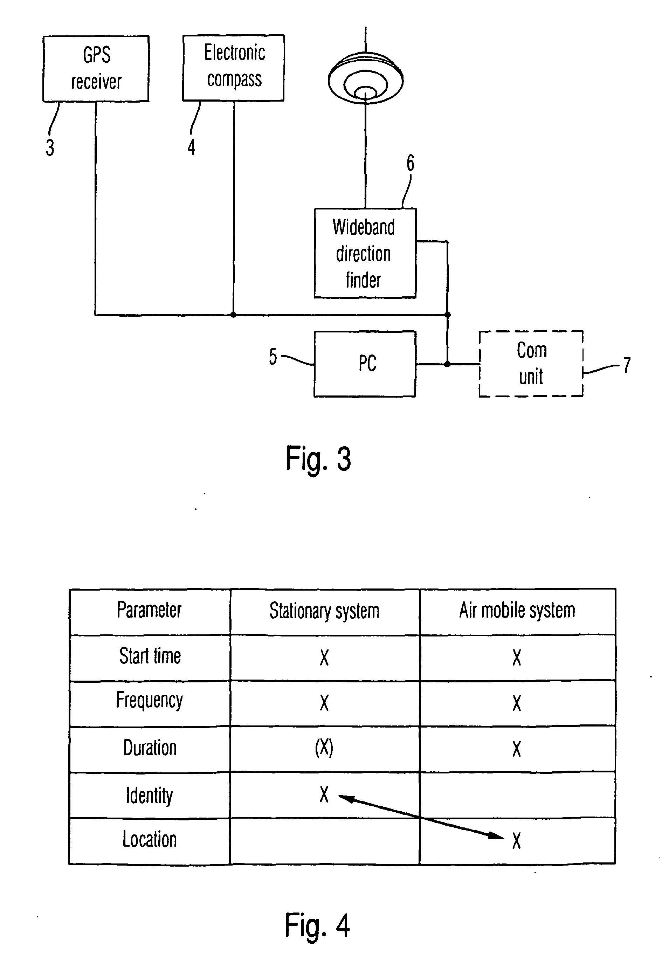

Wenn im Ermittlungsgebiet gleichzeitig jeweils eine größere Anzahl von Teilnehmern aktiv ist, wird vorzugsweise ein Breitbandpeiler 6 gemäß Fig. 3 benutzt, der alle die oben angegebenen Daten (Startzeit, Frequenz der aktiven Teilnehmer, eigene Position des Fluggeräts usw.) für alle jeweils aktiven Funkkanäle innerhalb des Uplink-Frequenzbereiches des Mobilfunksystems quasi parallel ermittelt und diese Daten wieder im Rechner 5 speichert. Ein solcher Breitbandpeiler ist zwar technisch aufwendiger, bietet sich aber dann an, wenn eine große Anzahl von Teilnehmern erwartet wird und/oder eine extrem hohe Zuverlässigkeit der Erfassung gefordert ist.

Anstelle der in Fig. 1 gezeigten Möglichkeit, mit einer Peileinrichtung und einem Flugzeug nacheinander von mehreren Flugpositionen aus den Teilnehmer s zu orten, könnte dies auch mit zwei oder mehr gleichzeitig im Ermittlungsgebiet fliegenden Fluggeräten und entsprechenden Peileinrichtungen erfolgen. In diesem Fall werden von jedem Flugzeug aus jeweils die Richtungen zu jeweils aktiven Teilnehmern ermittelt und wieder mit Frequenz- und Startzeit gespeichert, anschließend kann durch entsprechende Zuordnung der so in getrennten Flugzeugen gespeicherten Daten dann wieder durch ein Triangulationsverfahren der Standort der Teilnehmer ermittelt werden.

Die im Speicher des Rechners 5 gespeicherten Parameter (Startzeit der Aktivierung eines Funkkanals, Frequenz des Funkkanals, Dauer der Belegung und Standort des Teilnehmers) werden entweder unmittelbar über eine geeignete Datenübertragungsverbindung 7 oder nach der Landung an ein übliches stationäres Erfassungssystem übermittelt. In diesem stationären Erfassungssystem für das satellitengestützte Mobilfunksystem werden unabhängig vom beschriebenen luftbewegten System für jede Aktivität eines Teilnehmers jeweils die Startzeit dieser Aktivität, die Frequenz des zugewiesenen Uplink-Funkkanals sowie die Identität des Teilnehmers erfasst. Wenn möglich wird gleichzeitig auch die Dauer der Aktivität erfasst.

Diese durch das stationäre System erfassten Daten werden im Sinne der Fig. 4 mit den entsprechenden Daten des luftbewegten Systems zusammengefasst. Dies kann wieder entweder online oder offline erfolgen, um so die Zuordnung von Identität des Teilnehmers - erfasst durch das stationäre System - zum ermittelten Standort - ermittelt durch das luftbewegte System - zu erfassen. Teilnehmer, für die sich keine Korrelation zwischen Identität und Standort ergibt, werden dabei verworfen, da sie mit hoher Wahrscheinlichkeit nicht zu dem zu überwachenden System der Satellitenkommunikation gehören. Sie können alternativ einer zusätzlichen Beurteilung unterzogen werden, wenn andere, den gleichen Frequenzbereich nutzende Kommunikationssysteme ebenfalls mit einem entsprechenden stationären Erfassungssystem beobachtet werden.

## Patentansprüche

1. System zur Ermittlung des Standortes von Teilnehmern eines satellitengestützten Mobilfunksystems,
wobei mittels einer Funk-Empfangs- und Peil-Einrichtung, die in einem im Ermittlungsgebiet fliegenden Fluggerät angeordnet ist, die im Uplink-Frequenzbereich des Mobilfunksystems jeweils aktiven Funkkanäle und die Richtung (Azimut) der auf diesen Funkkanälen aktiven Teilnehmer gegenüber der momentanen Position des Fluggerätes ermittelt wird.

2. Systems nach Anspruch 1,
**dadurch gekennzeichnet,**
**dass** die ermittelte Richtung (Azimut) zusammen mit der momentanen Position des Fluggerätes und der Frequenz des zugehörigen Uplink-Funkkanals und gegebenenfalls der Uhrzeit in einem Speicher der Funk-Empfangs- und Peil-Einrichtung gespeichert wird.

3. System nach Anspruch 1 oder 2,
**dadurch gekennzeichnet,**
**dass** aus den für jeweils gleiche Funkkanäle gespeicherten Daten die Dauer der Kommunikation auf diesen Funkkanälen bestimmt wird.

4. System nach einem der vorhergehenden Ansprüche,
**dadurch gekennzeichnet,**
**dass** die Funk-Empfangs- und Peileinrichtung einen den Uplink-Frequenzbereich des Mobilfunksystems überwachenden Suchempfänger (1) und einen damit auf festgestellte aktive Funkkanäle kommandierbaren Schmalband-Funkpeiler (2) umfasst.

5. System nach einem der vorhergehenden Ansprüche 1 bis 3,
**dadurch gekennzeichnet,**
**dass** die Funk-Empfangs- und Peileinrichtung ein Breitbandpeiler (6) ist.

6. System nach Anspruch 2 oder 3,
**dadurch gekennzeichnet,**
**dass** aus mehreren für unterschiedliche Positionen (t1, t2, t3) des Fluggerätes ermittelten Richtungen (r1, r2, r3) eines auf dem selben Funkkanal aktiven Teilnehmers (s) durch ein Triambulationsverfahren eine Ortung durchgeführt wird.

7. System nach Anspruch 6,
**dadurch gekennzeichnet,**
**dass** der geortete Standort des Teilnehmers (s) zusammen mit den gespeicherten Daten einem stationären Erfassungssystem für satellitengestützte Mobilfunksysteme übergeben wird, in welchem die Frequenz der im Uplink-Frequenbereich jeweils aktiven Funkkanäle, die Anfangszeit und gegebenenfalls die Dauer der Aktivitäten der Teilnehmer und die Identität dieser Teilnehmer erfasst und aufgezeichnet werden, und durch Korrelation der im Fluggerät ermittelten Daten mit den Daten dieses stationären Erfassungssystems die Zuordnung des ermittelten Standortes zur ermittelten Identität des Teilnehmers bestimmt wird.

8. System nach einem der vorhergehenden Ansprüche,
**dadurch gekennzeichnet,**
**dass** die Übergabe der im Fluggerät ermittelten Daten zu dem stationären Erfassungssystem über eine Funkverbindung (7) erfolgt.

9. System nach einem der vorhergehenden Ansprüche 1 bis 7,
**dadurch gekennzeichnet,**
**dass** die Daten des Fluggerätes nach dessen Landung an das stationäre Erfassungssystem übermittelt werden.

10. System nach einem der vorhergehenden Ansprüche,
**dadurch gekennzeichnet,**
**dass** das Fluggerät ein bemanntes oder unbemanntes Flugzeug ist.

## Claims

1. System for determining the location of subscribers to a satellite mobile communications system, the radio channels respectively active in the uplink frequency range of the mobile communications system, and the direction (azimuth) of the subscribers active on these radio channels in relation to the instantaneous position of the aircraft, being determined by a radio reception and direction-finding device which is arranged in an aircraft flying in the determination area.

2. System according to Claim 1,
**characterized in that**
the established direction (azimuth) together with the instantaneous position of the aircraft and the frequency of the associated uplink radio channel and optionally the time are stored in a memory of the radio reception and direction-finding device.

3. System according to Claim 1 or 2,
**characterized in that**
from the data stored for the same radio channels in each case, the duration of the communication on these radio channels is determined.

4. System according to one of the preceding claims,
**characterized in that**
the radio reception and direction-finding device contains a scanning receiver (1) monitoring the uplink frequency range of the mobile communications system, and a narrowband radio direction finder (2) that can thereby be ordered onto detected active radio channels.

5. System according to one of the preceding claims 1 to 3, **characterized in that**
the radio reception and direction-finding device is a wideband direction finder (6).

6. System according to Claim 2 or 3,
**characterized in that**
from several directions (r1, r2, r3) determined for different positions (t1, t2, t3) of the aircraft for a subscriber (s) who is active on the same radio channel, a position is fixed with a triambulation method.

7. System according to Claim 6,
**characterized in that**
the location found by position fixing for the subscriber (s) together with the stored data is passed to a stationary recording system for satellite mobile communications systems, in which stationary recording system the frequency of the radio channels respectively active in the uplink frequency range, the start time and optionally the duration of the subscribers' activities and the identity of these subscribers is entered and recorded, and by correlation of the data determined in the aircraft with the data of this stationary recording system the assignment of the established location to the established identity of the subscriber is decided.

8. System according to one of the preceding claims,
**characterized in that**
the data determined in the aircraft is transferred to the stationary recording system over a radio link (7).

9. System according to one of the preceding claims 1 to 7, **characterized in that**
the data of the aircraft is transmitted after its landing to the stationary recording system.

10. System according to one of the preceding claims,
**characterized in that**
the aircraft is a manned or unmanned plane.

## Revendications

1. Système destiné à déterminer la localisation d'abonnés à un système de téléphone mobile par satellite,
dans lequel on détermine au moyen d'un dispositif de radioréception et radiogoniométrie, qui est disposé dans un aéronef volant dans la zone de détermination, les canaux radioélectriques actifs respectifs dans la plage de fréquences des liaisons montantes du système de téléphone mobile par satellite et la direction (azimut) de l'abonné actif sur ces canaux radioélectriques par rapport à la position momentanée de l'aéronef.

2. Système selon la revendication 1,
**caractérisé en ce que**,
la direction déterminée (azimut) ainsi que la position momentanée de l'aéronef et la fréquence du canal radioélectrique de liaison montante associé et, le cas échéant, l'heure sont stockés dans une mémoire du dispositif de radioréception et radiogoniométrie.

3. Système selon la revendication 1 ou 2,
**caractérisé en ce que**,
à partir des données stockées pour les mêmes canaux radioélectriques, on détermine la durée de la communication sur ces canaux radioélectriques.

4. Système selon une des revendications précédentes,
**caractérisé en ce que**,
le dispositif de radioréception et radiogoniométrie comprend un récepteur à balayage (1) surveillant la plage de fréquences des liaisons montantes du système de téléphone mobile par satellite et un radiogoniomètre à bande étroite (2) pouvant être commandé de cette façon sur des canaux radioélectriques actifs déterminés.

5. Système selon une des revendications précédentes 1 à 3,
**caractérisé en ce que**,
le dispositif de radioréception et radiogoniométrie est un radiogoniomètre à large bande (6).

6. Système selon la revendication 2 ou 3,
**caractérisé en ce que**,
un repérage est effectué par un procédé de triangulation à partir de plusieurs directions (r1, r2, r3) d'un abonné (S), actif sur le même canal radioélectrique, déterminées pour différentes positions (t1, t2, t3) de l'aéronef.

7. Système selon la revendication 6,
**caractérisé en ce que**,
la localisation repérée de l'abonné (S) ainsi que les données stockées sont remises à un système de détection stationnaire pour le système de téléphone mobile par satellite, dans lequel la fréquence des canaux radioélectriques actifs respectivement dans la plage de fréquences des liaisons montantes, le moment de commencement et, le cas échéant, la durée de l'activité de l'abonné et l'identité de cet abonné sont détectés et enregistrés, et l'attribution de la localisation déterminée à l'identité déterminée de l'abonné est définie en corrélant les données déterminées dans l'aéronef avec les données de ce système de détection stationnaire.

8. Système selon une des revendications précédentes,
**caractérisé en ce que**,
la remise des données déterminées dans l'aéronef au système de détection stationnaire se fait par le biais d'une liaison radioélectrique (7).

9. Système selon une des revendications précédentes 1 à 7,
**caractérisé en ce que**,
les données de l'aéronef sont communiquées, après son atterrissage, au système de détection stationnaire.

10. Système selon une des revendications précédentes,
**caractérisé en ce que**,
l'aéronef est un avion avec ou sans équipage.
